# EUROPÄISCHE PATENTANMELDUNG

(11) **EP 2 687 934 A1**
(43) Veröffentlichungstag der Anmeldung: **22.01.2014**
(21) Anmeldenummer: 12177155.4
(22) Anmeldetag: 19.07.2012
(51) Int. Cl.: G05B 19/418

(54) **Verfahren zum Zugriffsschutz eines Kommunikationsanschlusses einer Automatisierungskomponente und Automatisierungskomponente mit Zugriffsschutz**

(71) Anmelder: Siemens Aktiengesellschaft, 80333 München (DE)
(72) Erfinder: Schrey, Rolf, 41189 Mönchengladbach (DE)

(57) **Zusammenfassung**

Die Erfindung betrifft ein Verfahren sowie eine Automatisierungskomponente (SW) zum Zugriffsschutz eines Kommunikationsanschlusses (P1, ..., Pn) einer an einem Kommunikationsnetzwerk angebundenen industriellen Automatisierungskomponente (SW), wobei der Kommunikationsanschluss (P1, ..., Pn) nach einer ersten Inbetriebnahme gegen einen unbefugten Zugriff geschützt wird. Dabei wird nach der ersten Inbetriebnahme des Kommunikationsanschlusses (P1, ..., Pn) zumindest ein logischer und/oder physikalischer Betriebsparameter des Kommunikationsanschlusses (P1, ..., Pn) erfasst und gespeichert, wobei während eines nachfolgenden Betriebs der Automatisierungskomponente (SW) zumindest einmal zumindest ein aktueller Betriebsparameter erfasst und mit dem zumindest einen gespeicherten Betriebsparameter verglichen wird, und wobei bei einer signifikanten Abweichung des aktuellen von dem gespeicherten Betriebsparameter der Kommunikationsanschluss (P1, ..., Pn) in einen eingeschränkten Betriebszustand versetzt wird. Dadurch ist es möglich, manipulative Zugriffe auf den Kommunikationsanschluss (P1, ..., Pn) festzustellen und als Gegenmaßnahme die Funktion des Kommunikationsanschlusses (P1, ..., Pn) derart einzuschränken, dass ein manipulativer Zugriff auf die Automatisierungskomponente (SW) und auf andere Komponenten des Kommunikationsnetzwerks verhindert wird.

## Beschreibung

Die Erfindung betrifft ein Verfahren zum Zugriffsschutz eines Kommunikationsanschlusses einer industriellen Automatisierungskomponente gemäß dem Oberbegriff des Patentanspruchs 1, und eine industrielle Automatisierungskomponente mit Zugriffsschutz gemäß dem Oberbegriff des Patentanspruchs 7.

Industrielle Automatisierungsanordnungen bestehen aus einer Vielzahl von Automatisierungskomponenten, die mittels eines Netzwerks miteinander verknüpft sind. Solche Netzwerke, die beispielsweise auf Ethernet-Technologie basieren (Industrial Ethernet), müssen gegen unautorisierte Zugriffe abgesichert werden, um Manipulationen, Spionage etc. zu verhindern. Während bei solchen Netzwerken, welche ein Gateway zu einem öffentlichen Netzwerk (z.B. dem Internet) aufweisen, regelmäßig in ihren Gateways Firewalls und andere Maßnahmen vorsehen, um Angriffe "von außen" zu blockieren, ist die Netzwerktechnik gegenüber direkten, physischen Zugriffen "vor Ort" oft nicht ausreichend geschützt. Dies betrifft beispielsweise Switche und andere zentrale Netzwerkkomponenten, an die missbräuchlich und unautorisiert beispielsweise ein Laptop oder ein Programmiergerät angeschlossen werden könnte, womit dann unautorisiert Zugriffe auf die gesamte interne Kommunikation und auf alle angeschlossenen Netzwerkkomponenten bestehen kann. Ein solcher unautorisierter Anschluss eines "Fremdgerätes" kann dabei sowohl an freien Schnittstellen des Switches, Hubs, o.ä. erfolgen, als auch an bereits belegten Anschlüssen, an denen das reguläre Netzwerkgerät dann vorrübergehend abgesteckt und das irreguläre Netzwerkgerät dann angesteckt wird.

Zum Schließen dieser Sicherheitslücken ist es beispielsweise für die nicht-benutzten Anschlüsse (Schnittstellen) üblich, diese per Software zu deaktivieren. Alternativ gibt es Ansätze, die temporär nicht genutzten Anschlüsse durch verriegelbare oder verschließbare "Blindstecker" zu blockieren und für die benutzten Anschlüsse solche Netzwerkstecker vorzusehen, die sich nur mit einem Sonderwerkzeug oder einem Schlüssel entriegeln und entfernen lassen.

Einen ähnlichen Ansatz, der ebenfalls eine mechanische Blockierung eines unautorisierten Zugriffs vorsieht, offenbart auch die US 8,031,471 B2, wobei ein als "Secure Transparent Enclosure" bezeichnetes Gehäuse offenbart wird, in das ein Switch oder eine andere zu schützende Netzwerkkomponente eingebaut werden kann. Dieses Gehäuse soll dann abschließbar sein, beispielsweise mittels eines herkömmlichen Schlüssels oder dgl.

Diese mechanischen Lösungen sind oft mit dem Nachteil verbunden, dass in einer weitverzweigten Automatisierungsanordnung entweder entsprechend viele unterschiedliche Schlüssel und Werkzeuge vorgehalten werden müssen, oder aber nur ein oder wenige "Generalschlüssel" existieren, bei deren Abhandenkommen alle Schlösser bzw. speziellen Blindstecker und/oder verschließ/verriegelbare Stecker ausgetauscht werden müssten.

Die vorgenannten Lösungen verhindern zudem nicht, dass ein Switch oder dgl. durch das verschließbare Gehäuse oder durch die verriegelbaren Stecker etc. zwar tatsächlich vor direkten Zugriffen geschützt ist, jedoch an den regulär angeschlossenen Feldgeräten oder anderen Komponenten, die an einer entfernten Stelle der Anordnung installiert sein können, entsprechend auf das Netzwerkkabel oder die Verbindung zugegriffen wird. Dies bedeutet, dass ein mechanischer Schutz nur dann wirksam ist, wenn alle an der Kommunikation regulär beteiligten Geräte mit entsprechenden mechanischen Blockaden versehen sind. Dann müsste ein Angreifer die dazwischen liegende elektrische Verbindung "anzapfen", was zwar einen hohen Aufwand und ein entsprechendes Risiko für einen Angreifer bedeutet, aber dennoch nicht unmöglich ist.

Es ist also eine Aufgabe der vorliegenden Erfindung, einen einfachen und sicheren Zugriffsschutz für die Kommunikationsanschlüsse industrieller Automatisierungskomponenten vorzuschlagen.

Es ist eine Kernidee der vorliegenden Erfindung, anstelle oder zusätzlich zu mechanischen blockierenden Maßnahmen eine Veränderung von Betriebsparametern der einzelnen Kommunikationsanschlüsse gegenüber einem Sollzustand festzustellen, wobei bei einer signifikanten Abweichung der tatsächlichen, aktuellen Betriebsparameter zum Sollzustand der entsprechende Kommunikationsanschluss in einen sicheren Zustand überführt wird, beispielsweise durch "Abschalten", und zudem eine Meldung an einen Benutzer oder ein Sicherheitssystem abgesetzt wird. Erfindungsgemäß kann ein derart eingeschränkter oder abgeschalteter Kommunikationsanschluss durch eine Freigabemaßnahme wieder in Betrieb gesetzt werden.

Die Lösung der Aufgabe sieht insbesondere ein Verfahren gemäß dem Patentanspruch 1 und eine Automatisierungskomponente gemäß dem Patentanspruch 7 vor.

Dabei wird ein Verfahren zum Zugriffsschutz eines Kommunikationsanschlusses einer an einem Kommunikationsnetzwerk angebundenen industriellen Automatisierungskomponente vorgeschlagen, wobei der Kommunikationsanschluss nach einer ersten Inbetriebnahme gegen einen unbefugten Zugriff geschützt wird. Dazu wird nach der ersten Inbetriebnahme des Kommunikationsanschlusses zumindest ein logischer und/oder physikalischer Betriebsparameter des Kommunikationsanschlusses erfasst und gespeichert, wonach während eines nachfolgenden Betriebs der Automatisierungskomponente zumindest einmal zumindest ein aktueller Betriebsparameter erfasst und mit dem zumindest einen gespeicherten Betriebsparameter verglichen wird, und wobei bei einer signifikanten Abweichung des aktuellen von dem gespeicherten Betriebsparameter der Kommunikationsanschluss in einen eingeschränkten Betriebszustand versetzt wird. Dadurch ist es möglich, manipulative Zugriffe auf den Kommunikationsanschluss festzustellen und als Gegenmaßnahme die Funktion des Kommunikationsanschlusses derart einzuschränken, dass ein manipulativer Zugriff auf die Automatisierungskomponente und auf andere Komponenten des Kommunikationsnetzwerks verhindert wird.

Die Lösung der Aufgabe sieht außerdem eine Automatisierungskomponente mit einem mit einem Zugriffsschutz versehenen Kommunikationsanschluss zur Anbindung an ein Kommunikationsnetzwerk vor, wobei der Kommunikationsanschluss nach einer ersten Inbetriebnahme mittels des Zugriffsschutzes gegen einen unbefugten Zugriff schützbar ist. Dabei ist die Automatisierungskomponente zur Erfassung und Speicherung zumindest eines logischen und/oder physikalischen Betriebsparameters des Kommunikationsanschlusses nach der ersten Inbetriebnahme des Kommunikationsanschlusses eingerichtet, wobei die Automatisierungskomponente während eines nachfolgenden Betriebs zur Zumindest einmaligen Erfassung zumindest eines aktuellen Betriebsparameters und zum Vergleich des zumindest einen aktuellen mit dem zumindest einen gespeicherten Betriebsparameters eingerichtet ist, und wobei die Automatisierungskomponente für den Fall einer signifikanten Abweichung des zumindest einen aktuellen von dem zumindest einen gespeicherten Betriebsparameter zum Versetzen des Kommunikationsanschlusses in einen eingeschränkten Betriebszustand eingerichtet ist. Eine solche Automatisierungskomponente ist zur Durchführung des erfindungsgemäßen Verfahrens und damit zur Realisierung der anhand des Verfahrens beschriebenen Vorteile geeignet.

Vorteilhafte Ausgestaltungen des erfindungsgemäßen Verfahrens sind in den abhängigen Patentansprüchen 2 bis 6 angegeben, wobei deren Merkmale und Vorteile sinngemäß auch für die erfindungsgemäße Automatisierungskomponente gelten. Umgekehrt sind vorteilhafte Ausgestaltungen der erfindungsgemäßen Automatisierungskomponente in den abhängigen Patentansprüchen 8 bis 12 angegeben, wobei die diesbezüglichen Merkmale und Vorteile sinngemäß auch für das erfindungsgemäße Verfahren gelten.

In einer vorteilhaften Ausgestaltung initiiert die Automatisierungskomponente nach Feststellung der Abweichung eine Meldung an ein Sicherheitssystem und/oder eine Meldung an einen Benutzer, die beispielsweise an einem Bedien- und Beobachtungsgerät ausgegeben werden kann. Das Sicherheitssystem und/oder der Benutzer kann dann prüfen, ob tatsächlich ein unautorisierter Zugriff vorliegt, wobei ggf. der Kommunikationsanschluss wieder freigegeben wird, oder nicht. Die Freigabe kann beispielsweise durch den Benutzer mittels Eingabe eines Codewortes oder durch eine andere Bedienprozedur erfolgen. Alternativ ist es möglich, ein codiertes Freigabe-Netzwerkelement, also einen "Security Key" oder "Toke", an die Automatisierungskomponente oder an ein anderes Netzwerkelement desselben Netzsegmentes anzuschließen, wodurch der betreffende Kommunikationsanschluss wieder freigegeben wird. In einer vorteilhaften Ausgestaltung kann verlangt werden, dass das Freigabe-Netzwerkelement an genau denjenigen Kommunikationsanschluss kurzzeitig angesteckt werden muss, an dem danach wieder eine reguläre Verbindung angesteckt werden soll, wodurch der Kommunikationsanschluss dann freigeschaltet ist.

Vorteilhaft kann dabei das kurzzeitige Anstecken des Freigabe-Netzwerkelementes, welches beispielsweise auch weitere Sicherungsmaßnahmen wie eine Tastatur zur Eingabe eines PINs etc. umfassen kann, den entsprechenden Kommunikationsanschluss oder die gesamte betroffene Automatisierungskomponente für eine begrenzte Zeit, beispielsweise 30s, in einen sogenannten "Lernmodus" versetzen, bei dem die Betriebsparameter einer neu angesteckten Verbindung eingelernt werden, und wobei nach Abschluss der "Lernphase" die Überwachung des betroffenen Kommunikationsanschlusses hinsichtlich geänderter Betriebsparameter mit den neuen Sollwerten gestartet wird. Anstelle der Verwendung eines codierten Freigabe-Netzwerkelementes kann der Lernvorgang auch auf andere Weise initiiert werden, beispielsweise durch eine entsprechende Eingabe an einem Bedien- und Beobachtungsgerät (HMI-Gerät) der Automatisierungsanordnung. Sofern die betroffene Kommunikationskomponente über eine eigene Benutzerschnittstelle, beispielsweise Tasten und Leuchtdioden oder Display, verfügt, kann der "Lernvorgang" auch direkt an der betroffenen Kommunikationskomponente initiiert werden.

Während logische Betriebsparameter sowohl für drahtlose als auch für drahtgebundene Kommunikationsanschlüsse gleicher Maßen ausgewählt und verwendet werden können, bietet sich bei Verwendung drahtgebundener Kommunikationsanschlüsse die Messung einer Leitungsdämpfung, eines Schleifenwiderstands, eines Wellenwiderstands, eines Rauschmaßes oder anderer elektrischer Parameter als zu überwachende Betriebsparameter an. Einige dieser Informationen sind bei heutzutage gebräuchlichen Kommunikationsschnittstellen, z.B. Netzwerkkarten oder -chipsets, ohnehin bereits per Software auslesbar. Vorteilhaft wird für die gemessenen Betriebsparameter ein "Toleranzfenster" definiert, innerhalb dessen Abweichungen erlaubt sind, ohne das von einer missbräuchlichen Verwendung des Kommunikationsanschlusses ausgegangen werden muss.

Als logischer Betriebsparameter kann vorteilhaft zumindest eine MAC-Adresse eine an dem Kommunikationsanschluss angebundene Komponente verwendet werden, wobei bei einer Änderung der angeschlossenen MAC-Adresse ein unautorisierter Wechsel des angeschlossenen Gerätes angenommen werden kann. Um sicher zu stellen, dass bei einer zugelassenen Änderung im Kommunikationsnetzwerk, beispielsweise bei einem defekt-bedingten Austausch eines Feldgerätes, ein reibungsloser Weiterbetrieb der Automatisierungsanordnung gewährleistet ist, kann bezüglich der MAC-Adressen spezifiziert sein, dass auch abweichende MAC-Adressen desselben Herstellers und derselben Gerätelinie erlaubt sein können. Dabei macht man sich zu Nutze, dass auch die Vergabe von MAC-Adressen, die weltweit eindeutig sein sollten, nach hierarchischen Kriterien erfolgt. Zusätzlich kann spezifiziert sein, dass ein Wechsel der MAC-Adresse erlaubt sein kann, solange aus dem neu angeschlossenen Gerät identische Typ-Informationen abgerufen werden können. Somit ist dann ein typgleicher Austausch von Geräten ohne Weiteres möglich.

Als weitere logische Betriebsparameter können vorteilhaft ohnehin bereits erfasste Betriebsparameter wie durchschnittliche Paketlaufzeit in paketorientierten Netzwerken, durchschnittliche Antwortlaufzeiten etc. verwendet werden. Ein besonderer Schutz ergibt sich, indem während einer "Lernphase", also nach der ersten Inbetriebnahme des Kommunikationsanschlusses, ein Nutzungsprofil des Datenverkehrs an diesem Kommunikationsanschluss erstellt wird. Dies bedeutet, dass beispielsweise das durchschnittliche Datenvolumen, Last-Minima und Last-Maxima etc. statistisch erfasst werden, wobei im nachfolgenden "produktiven Betrieb" die Last am entsprechenden Kommunikationsanschluss weiterhin beobachtet wird und bei signifikanten Abweichungen ein Alarm ausgelöst wird. Vorteilhaft wird eine Kombination der Überwachung von logischen und physikalischen Betriebsparametern durchgeführt.

Besonders vorteilhaft wird das Verfahren angewendet, wenn als die Automatisierungskomponente ein Switch oder eine andere zentrale Netzwerkkomponente verwendet wird. Zum einen sind solche zentralen Netzwerkkomponenten für potentielle Angreifer besonders interessant, weil damit der gesamte Datentransfer eines Netzwerks oder zumindest eines Netzsegmentes zugreifbar ist. Zum anderen kann es oft genügen, den Schutz auf solche zentralen Netzwerkkomponenten zu beschränken, was den Aufwand verringert. Insbesondere brauchen dann nur die zentralen Netzwerkkomponenten mit einer Software zur Überwachung der Kommunikationsanschlüsse ausgerüstet werden.

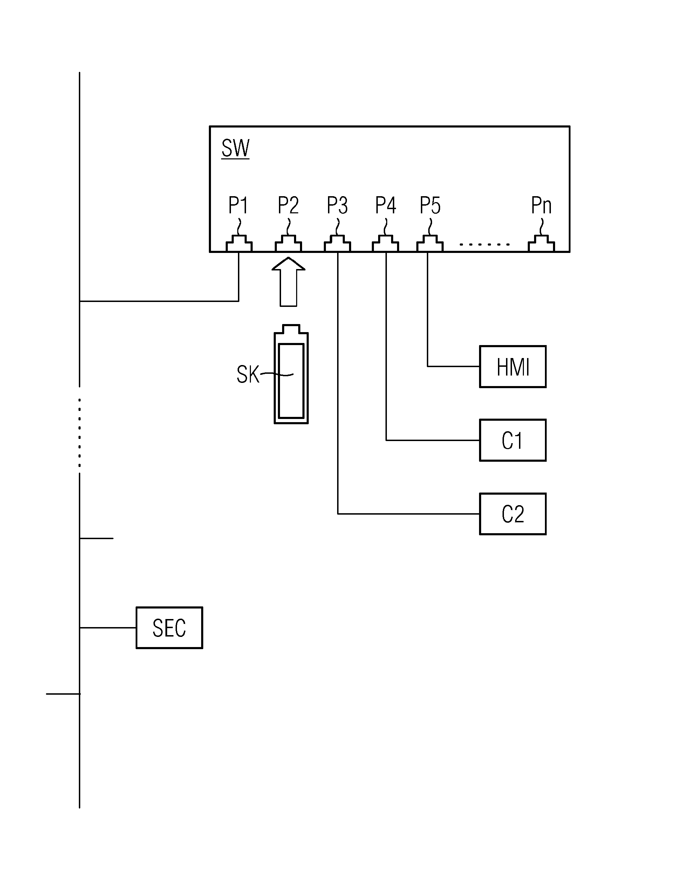

Ein Ausführungsbeispiel des erfindungsgemäßen Verfahrens wird nachfolgend anhand der Zeichnung erläutert. Damit soll gleichzeitig eine erfindungsgemäße Automatisierungskomponente beschrieben werden.

Dabei zeigt die einzige Figur in schematischer Darstellung eine industrielle Automatisierungsanordnung mit einem Switch als Automatisierungskomponente und daran angeschlossenen anderen Netzwerkkomponenten bzw. Geräten.

In der Figur ist als Automatisierungskomponente SW ein "Switch" mit den Kommunikationsanschlüssen P1, ..., Pn dargestellt, wobei an dem Kommunikationsanschluss P1 als "Uplink" eine übergeordnete Netzwerk-Infrastruktur (die nicht detailliert dargestellt ist) angebunden ist, während die Kommunikationsanschlüsse P2, ..., Pn lokal verwendet werden. Dabei sind beispielsweise an den Kommunikationsanschlüssen P3, P4 die Komponenten C2, C1 angeschlossen, die im vorliegenden Beispiel Automatisierungs-Controller (PLC - Programmable Logic Controller) oder andere mikroprozessorgesteuerte Geräte (Feldgeräte) sein können. An dem Kommunikationsanschluss P5 ist exemplarisch ein Bedien- und Beobachtungsgerät HMI (HMI = Human-Machine-Interface) angeschlossen, welches eine Benutzerschnittstelle in der Automatisierungsanordnung darstellt. Es sei angenommen, dass alle dargestellten Komponenten zu demselben Netzsegment gehören. In dem Automatisierungsnetzwerk ist weiterhin ein Sicherheitssystem SEC (Security-Server) angeschlossen, welches detaillierte Informationen über erlaubte und nicht-erlaubte Netzwerkkomponenten, Signaturen und dgl. umfassen kann. Weiterhin ist in der Figur als Freigabe-Netzwerkelement ein Token SK ("Security Key") dargestellt, dessen Funktion später erläutert wird.

Bei einer ersten Inbetriebnahme oder zu einem späteren, von einem Benutzer definierten Zeitpunkt werden von der Automatisierungskomponente SW für jeden der Kommunikationsanschlüsse P1, ..., Pn Betriebsparameter erfasst, wobei beispielsweise für die Kommunikationsanschlüsse P1, P3, P4 und P5 die MAC-Adressen und einige elektrische Parameter, beispielsweise die Leitungsdämpfung, ermittelt und gespeichert werden.

Nach Abschluss dieser "Lernphase" wird die Automatisierungskomponente SW bezüglich ihrer Schnittstellen in einen "Überwachungszustand" versetzt, bei dem zumindest einmal, hier allerdings zyklisch die aktuellen Betriebsparameter der Kommunikationsanschlüsse P1, ..., Pn überwacht werden. Während bei dem Kommunikationsanschluss P2 und den anderen nicht genutzten Kommunikationsanschlüssen ohnehin ein eingeschränkter Betriebszustand, der keinen Zugriff auf wichtige Informationen, Datenströme etc. gestattet, bereits aktiviert ist, führt bei den anderen Kommunikationsanschlüssen P1, P3, P4, P5 jegliche Änderung hinsichtlich der Betriebsparameter zu einem Alarm, dies bedeutet, dass bereits durch ein Abstecken (Unterbrechung) einer Netzwerkverbindung, wodurch sich die Leitungsdämpfung und andere elektrische Betriebsparameter signifikant ändern, der entsprechende Kommunikationsanschluss temporär abgeschaltet bzw. in einen eingeschränkten, sicheren Betriebszustand versetzt wird. Bei einem Wieder-Verbinden desselben Gerätes mit denselben Betriebsparametern kann je nach Konfiguration eine automatische Reaktivierung des Anschlusses vorgesehen sein. Dazu kann in der Automatisierungskomponente ein Regelwerk hinsichtlich erlaubter und nicht-erlaubter Abweichungen definiert sein. Alternativ kann das Regelwerk auch in einer anderen Netzwerkkomponente, beispielsweise im Sicherheits-Server SEC, gespeichert sein, wobei alle oder zumindest abweichende Betriebsparameter jeweils an den Sicherheits-Server SEC gemeldet und dort ausgewertet werden können.

Im Folgenden soll angenommen sein, dass an dem Kommunikationsanschluss P3 das dort angeschlossene Gerät C2 abgesteckt und durch ein (nicht dargestelltes) anderes Gerät C3 ersetzt wird. Dieses neue Gerät C3 hat andere logische Betriebsparameter (zumindest eine abweichende MAC-Adresse) und möglicher Weise auch andere elektrische Betriebsparameter, so dass der Wechsel auf jeden Fall anhand der geänderten Betriebsparameter detektiert wird. Entsprechend erfolgt nun, gesteuert durch eine Software der Automatisierungskomponente SW oder des Sicherheitsservers SEC, eine Meldung an einer Benutzeroberfläche des Bedien- und Beobachtungsgerätes HMI, wobei ein Benutzer mittels Eingabe eines Codes oder dgl. die Verwendung des neuen Gerätes C3 autorisieren kann, oder aber nicht. Alternativ kann der Wechsel mit den neu festgestellten Betriebsparametern an dem Sicherheitsserver SEC übermittelt werden, wonach dieser anhand eines dort gespeicherten Regelwerks, Tabellen etc. bestimmt, ob das neue Gerät C3 als Ersatz für das bestehende Gerät C2 verwendet werden darf, oder nicht. Je nach Ausgang dieser Prüfung kann an die Automatisierungskomponente SW eine Nachricht gesendet werden, wonach der betreffende Kommunikationsanschluss P3 wieder vollumfänglich freigeschaltet wird, oder nicht. Im Falle einer Freischaltung werden dann die neuen, jetzt aktuellen Betriebsparameter als neue Sollwerte gespeichert, und eine neue Überwachung des Kommunikationsanschlusses P3 wird gestartet.

Als Alternative für den beschriebenen Freigabe-Vorgang mittels des Bedien- und Beobachtungsgerätes HMI oder des beschriebenen Sicherheits-Servers SEC kann auch ein Freigabe-Token SK verwendet werden, welches beispielsweise in einem definierten Zeitraum vor oder während des Anschlusses des neuen Gerätes C3 an einem der Kommunikationsanschlüsse P1, ..., Pn des Automatisierungsgerätes SW angesteckt werden muss. Beim Anstecken des Tokens SK werden dabei Freigabeinformationen, beispielsweise ein Zertifikat, über die betreffende Schnittstelle (hier: Kommunikationsanschluss P2) an die Automatisierungskomponente SW oder alternativ an den Sicherheitsserver SEC übermittelt, wodurch das gleichzeitig oder danach angeschlossene neue Gerät C3 akzeptiert wird und, wie beschrieben, dessen aktuelle Betriebsparameter als neue Sollwerte für den betroffenen Kommunikationsanschluss P3 gespeichert werden. In einer alternativen Ausführungsform kann verlangt sein, dass das Token SK kurzzeitig an genau denjenigen Kommunikationsanschluss P3 angesteckt werden muss, an dem später innerhalb einer Karenzzeit (beispielsweise eine Minute) das neue Gerät C3 angesteckt wird. Das Token SK kann dabei mit weiteren Sicherheitseinrichtungen versehen sein, beispielsweise eine Eingabevorrichtung für Codes etc. Es kann auch verlangt sein, dass das Token SK vorher mittels einer Sicherheitseinrichtung, beispielsweise dem Sicherheits-Server SEC, mit einem aktuellen und nur eine begrenzte Zeit gültigen "Zertifikat" oder dgl. geladen werden muss, so dass verloren gegangene "Token" nach einer definierten Zeitspanne ungültig werden.

Durch die Überwachung von Wellen- und Schleifenwiderständen und anderen elektrischen Parametern kann nicht nur beim temporären Anstecken unautorisierter Geräte ein Schutz erreicht werden, sondern auch beim "Anzapfen" bestehender Leitungen und Verbindungen, wobei das "Anzapfen" auch dann bemerkt werden kann, wenn dabei keine kurzzeitige Unterbrechung eines Leitungsweges erfolgt. Die Überwachung logischer Betriebsparameter kann einen zusätzlichen Schutz auch bei funkbasierten Netzwerkverbindungen, die oft bereits durch Verschlüsselungsmaßnahmen und dgl. ohnehin schon gesichert sind, bewirken. Im Übrigen können auch die Abweichungen aktueller Betriebsparameter von den als Sollwerten gespeicherten Betriebsparametern quantitativ klassifiziert werden, so dass bei geringfügigen Abweichungen beispielsweise ein Nachführen der gespeicherten Betriebsparameter erfolgt, während bei mittleren Abweichungen nur Warnmeldungen, aber keine Abschaltungen erfolgen, während bei größeren Abweichungen sofort die beschriebenen Maßnahmen, insbesondere das sofortige Sperren oder Einschränken eines Kommunikationsanschlusses, erfolgen können. Außerdem können je nach Konfiguration der Sicherheits-Parameter beispielsweise kurzzeitige Unterbrechungen, die in einem industriellen Umfeld auch im regulären Betrieb auftreten können, durchaus toleriert werden, während erst signifikante Änderungen der Betriebsparameter nach einer kurzzeitigen Unterbrechung zu einem Ansprechen der Sicherheitslogik führen soll.

## Patentansprüche

1. Verfahren zum Zugriffsschutz eines Kommunikationsanschlusses (P1, ..., Pn) einer an einem Kommunikationsnetzwerk angebundenen industriellen Automatisierungskomponente (SW), wobei der Kommunikationsanschluss (P1, ..., Pn) nach einer ersten Inbetriebnahme gegen einen unbefugten Zugriff geschützt wird, **dadurch gekennzeichnet,**
**dass** nach der ersten Inbetriebnahme des Kommunikationsanschlusses (P1, ..., Pn) zumindest ein logischer und/oder physikalischer Betriebsparameter des Kommunikationsanschlusses (P1, ..., Pn) erfasst und gespeichert wird,
**dass** während eines nachfolgenden Betriebs der Automatisierungskomponente (SW) zumindest einmal zumindest ein aktueller Betriebsparameter erfasst und mit dem zumindest einen gespeicherten Betriebsparameter verglichen wird, und
**dass** bei einer signifikanten Abweichung des aktuellen von dem gespeicherten Betriebsparameter der Kommunikationsanschluss (P1, ..., Pn) in einen eingeschränkten Betriebszustand versetzt wird.

2. Verfahren nach Patentanspruch 1,
**dadurch gekennzeichnet,**
**dass** in dem Kommunikationsnetzwerk nach einer Versetzung der Automatisierungskomponente (SW) in den eingeschränkten Betriebszustand eine Meldung an ein Sicherheitssystem (SEC) und/oder eine Meldung an einen Benutzer erfolgt, wobei im Falle einer Freigabe durch das Sicherheitssystem (SEC) und/oder durch den Benutzer der Kommunikationsanschluss (P1, ..., Pn) in nicht-eingeschränkten Betriebszustand zurückversetzt wird.

3. Verfahren nach Patentanspruch 2,
**dadurch gekennzeichnet,**
**dass** die Freigabe durch eine manuelle Eingabe an einer Bedienstation oder durch Anschluss eines codierten Freigabe-Netzwerkelementes (SK) an einem Kommunikationsanschluss (P1, ..., Pn) der Automatisierungskomponente (SW) oder durch das Anbinden des Freigabe-Netzwerkelementes (SK) an einem der Automatisierungskomponente (SW) zugeordneten Netzsegment des Kommunikationsnetzwerkes initiiert wird.

4. Verfahren nach einem der vorhergehenden Patentansprüche, **dadurch gekennzeichnet,**
**dass** im Fall der Verwendung eines drahtgebundenen Kommunikationsanschlusses (P1, ..., Pn) als physikalischer Betriebsparameter eine Leitungsdämpfung oder ein Schleifenwiderstand oder ein Wellenwiderstand oder ein Rauschmaß oder ein anderer elektrischer Parameter verwendet wird.

5. Verfahren nach einem der vorhergehenden Patentansprüche, **dadurch gekennzeichnet,**
**dass** als logischer Betriebsparameter eine MAC-Adresse einer an dem Kommunikationsanschluss (P1, ..., Pn) angebundenen Komponente oder eine durchschnittliche Paketlaufzeit oder eine durchschnittliche Antwortlaufzeit oder ein statistisches Nutzungsprofil verwendet wird.

6. Verfahren nach einem der vorhergehenden Patentansprüche, **dadurch gekennzeichnet,**
**dass** als die Automatisierungskomponente (SW) ein Switch oder eine andere zentrale Netzwerkkomponente des Kommunikationsnetzwerks verwendet wird.

7. Automatisierungskomponente (SW) mit einem mit einem Zugriffsschutz versehenen Kommunikationsanschluss (P1, ..., Pn) zur Anbindung an ein Kommunikationsnetzwerk,
wobei der Kommunikationsanschluss (P1, ..., Pn) nach einer ersten Inbetriebnahme mittels des Zugriffsschutzes gegen einen unbefugten Zugriff schützbar ist,
**dadurch gekennzeichnet,**
**dass** die Automatisierungskomponente (SW) zur Erfassung und Speicherung zumindest eines logischen und/oder physikalischen Betriebsparameters des Kommunikationsanschlusses (P1, ..., Pn) nach der ersten Inbetriebnahme des Kommunikationsanschlusses (P1, ..., Pn) eingerichtet ist,
**dass** die Automatisierungskomponente (SW) während eines nachfolgenden Betriebs zur zumindest einmaligen Erfassung zumindest eines aktuellen Betriebsparameters und zum Vergleich des zumindest einen aktuellen mit dem zumindest einen gespeicherten Betriebparameters eingerichtet ist, und
**dass** die Automatisierungskomponente (SW) für den Fall einer signifikanten Abweichung des zumindest einen aktuellen von dem zumindest einen gespeicherten Betriebsparameter zum Versetzen des Kommunikationsanschlusses (P1, ..., Pn) in einen eingeschränkten Betriebszustand eingerichtet ist.

8. Automatisierungskomponente (SW) nach Patentanspruch 7, **dadurch gekennzeichnet,**
**dass** die Automatisierungskomponente (SW) zur Meldung des Wechsels des Kommunikationsanschlusses (P1, ..., Pn) in den eingeschränkten Betriebszustand an einen Benutzer und/oder an ein Sicherheitssystem (SEC) eingerichtet ist, wobei die Automatisierungskomponente (SW) zum Zurückversetzen des Kommunikationsanschlusses (P1, ..., Pn) in einen nicht-eingeschränkten Betriebszustand für den Fall einer Freigabe durch das Sicherheitssystem (SEC) und/oder durch den Benutzer eingerichtet ist.

9. Automatisierungskomponente (SW) nach Patentanspruch 8, **dadurch gekennzeichnet,**
**dass** die Freigabe durch eine Eingabe an einer Bedienstation eingebbar ist, oder durch den Anschluss eines codierten Freigabe-Netzwerkelementes (SK) an der Automatisierungskomponente (SW) oder an einem der Automatisierungskomponente (SW) zugeordneten Netzsegmentes des Kommunikationsnetzwerks vorgesehen ist.

10. Automatisierungskomponente (SW) nach einem der Patentansprüche 7 bis 9,
**dadurch gekennzeichnet,**
**dass** im Fall einer drahtgebundenen Ausführung des Kommunikationsanschlusses (P1, ..., Pn) als ein physikalischer Betriebsparameter eine Leitungsdämpfung oder ein Schleifenwiderstand oder ein Wellenwiderstand oder ein anderer elektrischer Parameter durch die Automatisierungskomponente (SW) erfassbar ist.

11. Automatisierungskomponente (SW) nach einem der Patentansprüche 7 bis 10,
**dadurch gekennzeichnet,**
**dass** die Automatisierungskomponente (SW) zur Erfassung einer MAC-Adresse einer an dem Kommunikationsanschluss (P1, ..., Pn) angebundenen Komponente oder einer durchschnittlichen Paketlaufzeit oder einer durchschnittlichen Antwortlaufzeit oder eines statistischen Nutzungsprofils als Betriebsparameter eingerichtet ist.

12. Automatisierungskomponente (SW) nach einem der Patentansprüche 7 bis 11,
**dadurch gekennzeichnet,**
**dass** die Automatisierungskomponente (SW) ein Switch oder eine andere zentrale Netzwerkkomponente des Kommunikationsnetzwerks ist.
